(19) Europäisches Patentamt / European Patent Office / Office européen des brevets

(11) EP 4 197 975 A1

(12) # EUROPEAN PATENT APPLICATION
published in accordance with Art. 153(4) EPC

(43) Date of publication:
**21.06.2023 Bulletin 2023/25**

(21) Application number: **20949497.0**

(22) Date of filing: **11.08.2020**

(51) International Patent Classification (IPC):
***C02F 1/28*** *(2023.01)* ***B01J 20/26*** *(2006.01)*
***B01J 20/30*** *(2006.01)*

(52) Cooperative Patent Classification (CPC):
**B01J 20/26; B01J 20/30; C02F 1/28**

(86) International application number:
**PCT/JP2020/030577**

(87) International publication number:
**WO 2022/034635 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **National University Corporation Kanazawa University**
  **Ishikawa 920-1192 (JP)**
- **Daicel Corporation**
  **Osaka 530-0011 (JP)**

(72) Inventors:
- **HASEGAWA, Hiroshi**
  **Kanazawa-shi, Ishikawa 920-1192 (JP)**
- **NAKAKUBO, Keisuke**
  **Kanazawa-shi, Ishikawa 920-1192 (JP)**
- **YUNOSHITA, Koki**
  **Kanazawa-shi, Ishikawa 920-1192 (JP)**
- **MASHIO, Asami**
  **Kanazawa-shi, Ishikawa 920-1192 (JP)**
- **MAEDA, Katsuhiro**
  **Kanazawa-shi, Ishikawa 920-1192 (JP)**
- **TANIGUCHI, Tsuyoshi**
  **Kanazawa-shi, Ishikawa 920-1192 (JP)**
- **NISHIMURA, Tatsuya**
  **Kanazawa-shi, Ishikawa 920-1192 (JP)**
- **MITSUHASHI, Yoko**
  **Tokyo 108-8230 (JP)**
- **ENDO, Masaru**
  **Tokyo 108-8230 (JP)**
- **ARAI, Takashi**
  **Tokyo 108-8230 (JP)**

(74) Representative: **Hoffmann Eitle**
**Patent- und Rechtsanwälte PartmbB**
**Arabellastraße 30**
**81925 München (DE)**

(54) **SELENIOUS ACID-ADSORBING MATERIAL**

(57) The present disclosure provides an adsorbent which is produced using a low environmental load material as a raw material and adsorbs selenious acid selectively and efficiently. A selenious acid adsorbent according to the present disclosure includes a cellulose derivative (I) having a repeating unit represented by Formula (I). In Formula (I), each $R^a$ represents a hydrogen atom, a group represented by Formula (a-1), or a group represented by Formula (a-2), and at least one of all the $R^a$s included in the cellulose derivative is a group represented by Formula (a-1) or a group represented by Formula (a-2):

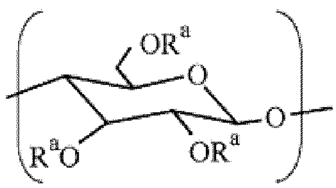

(I)

EP 4 197 975 A1

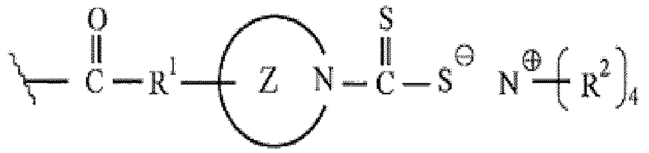

(a-1)

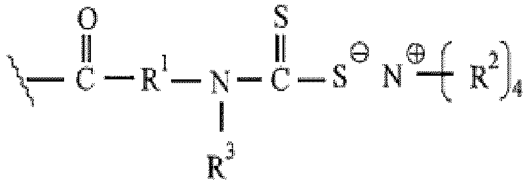

(a-2)

## Description

### Technical Field

The present disclosure relates to a selenious acid adsorbent, a method for producing the adsorbent, and a method for recovering selenious acid using the adsorbent.

### Background Art

In most cases, selenious acid is contained in wastewater discharged from a desulfurization unit in a coal-fired power plant or the like. Since the Water Pollution Prevention Law stipulates effluent standard values for selenium, it is required to recover and remove selenium from the wastewater.

As a method for removing selenium from wastewater, known is a method including: insolubilizing tetravalent selenium by an iron-based chemical or a chelator; and separating the solid and liquid (e.g., Patent Document 1). However, in an environment of coexistence with anions such as a halogen ion, a sulfite ion, a sulfate ion, and a phosphate ion, these anions also react with the iron or the chelator and compete with the reaction of tetravalent selenium. Consequently, it has been difficult to remove tetravalent selenium efficiently and selectively.

Under the conditions of competition with the anions, the iron-based chemical and the chelator are consumed by the anions. Thus, it is necessary to use extra amounts for the consumed iron-based chemical and chelator, resulting in an increase in the amounts of the iron-based chemical and the chelator to be used. With the increase in the amounts of the iron-based chemical and the chelator to be used, the amount of the insolubilized product generated by the reaction increases. This causes an issue such that it is necessary to increase the scale of wastewater treatment facility for precipitating the insolubilized product and separating the solid and liquid, and the amount of waste increases. Furthermore, when the iron-based chemical is used, the wastewater after removal of tetravalent selenium is colored. This causes a problem such that color removal treatment is necessary to meet the wastewater standard.

Patent Document 2 discloses that an acrylic acid/alkylamine polymer having a dithiocarbamate salt group traps selenious acid in the wet flue gas desulfurizer liquor to reduce the concentration of selenium in the liquor.

### Citation List

### Patent Document

Patent Document 1: JP H10-249392 A

Patent Document 2: JP 2015-506274 A

### Summary of Invention

### Technical Problem

However, the acrylic acid/alkylamine polymer is produced using petroleum as a raw material. With rising interest in environmental issues in recent years, there is a need for use of low environmental load materials.

In addition, from the viewpoint of preventing the wastewater treatment facility from becoming large-scale and reducing the amount of waste, there has been a need for development of a selenious acid removal unit having higher adsorption and selectivity.

Accordingly, an object of the present disclosure is to provide an adsorbent which is produced using a low environmental load material as a raw material and adsorbs selenious acid selectively and efficiently, and a method for producing the adsorbent.

Another object of the present disclosure is to provide a wastewater treatment apparatus having a function of removing selenious acid in wastewater using the adsorbent.

Yet another object of the present disclosure is to provide a wastewater treatment method including recovering selenious acid in wastewater using the adsorbent.

### Solution to Problem

As a result of intensive studies to solve the above issues, the present inventors have found that a cellulose

derivative having a group represented by Formula (a-1) and/or (a-2) below as a substituent can selectively and efficiently adsorb selenious acid even in an environment of coexistence with anions. They have also found that the cellulose derivative can adsorb selenious acid more efficiently than the acrylic acid/alkylamine polymer. The present disclosure has been completed based on these findings.

Hence, the present disclosure provides a selenious acid adsorbent including a cellulose derivative (I) having a repeating unit represented by Formula (I) below:

[Chem. 1]

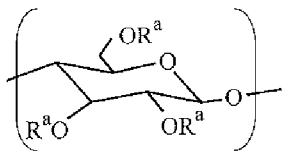

(I)

where each $R^a$ is identical or different and represents a hydrogen atom, a group represented by Formula (a-1), or a group represented by Formula (a-2), and at least one of all the $R^a$s included in the cellulose derivative is a group represented by Formula (a-1) or a group represented by Formula (a-2):

[Chem. 2]

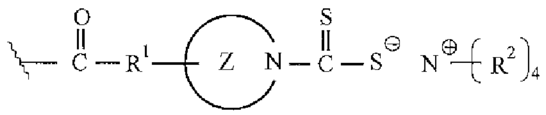

(a-1)

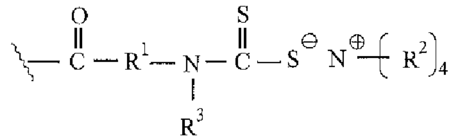

(a-2)

where ring Z represents a heterocycle containing a nitrogen atom as a heteroatom, $R^1$ represents a single bond or an alkylene group having from 1 to 10 carbons, $R^2$ represents an alkyl group having from 1 to 10 carbons, and four $R^2$s may be identical or different, and $R^3$ represents a hydrogen atom or an alkyl group having from 1 to 10 carbons.

The present disclosure also provides the selenious acid adsorbent, in which a total degree of substitution of the group represented by Formula (a-1) and the group represented by Formula (a-2) is from 0.1 to 3.0.

The present disclosure also provides a wastewater treatment apparatus including the selenious acid adsorbent.

The present disclosure also provides the wastewater treatment apparatus, in which the wastewater treatment apparatus has a function of bringing wastewater containing selenious acid into contact with the included selenious acid adsorbent, causing the selenious acid to be adsorbed onto the selenious acid adsorbent, and removing the selenious acid from the wastewater.

The present disclosure also provides a wastewater treatment method including: bringing wastewater containing selenious acid into contact with the selenious acid adsorbent, causing the selenious acid to be adsorbed onto the selenious acid adsorbent, and removing the selenious acid from the wastewater.

The present disclosure also provides a method for producing a selenious acid adsorbent, the method including: preparing a cellulose derivative (I) having a repeating unit represented by Formula (I) through the following steps [1] to [3]; and producing the selenious acid adsorbent using the prepared cellulose derivative (I):

[1] reacting cellulose with a compound represented by Formula (2-1) or (2-2) to produce a cellulose derivative (II) having a repeating unit represented by Formula (II):

[Chem. 3]

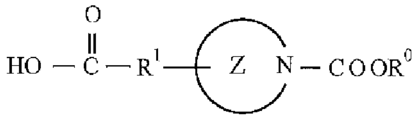

(2-1)

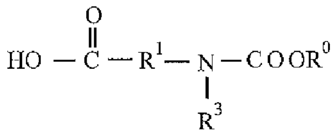

(2-2)

where ring Z represents a heterocycle containing a nitrogen atom as a heteroatom, and $R^1$ represents a single bond or an alkylene group having from 1 to 10 carbons, and $R^3$ represents a hydrogen atom or an alkyl group having from 1 to 10 carbons, and $R^0$ represents a monovalent hydrocarbon group or a monovalent heterocyclic group,

[Chem. 4]

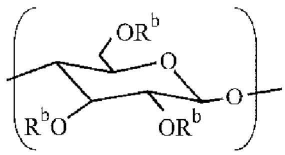

(II)

where each $R^b$ is identical or different and represents a hydrogen atom or a group represented by Formula (b-1) or a group represented by Formula (b-2),

[Chem. 5]

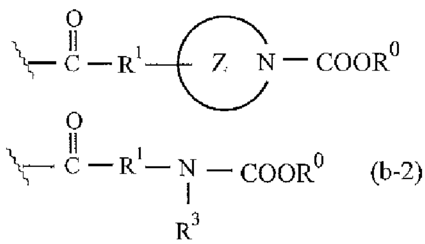

(b-1)

(b-2)

where ring Z, $R^1$, $R^3$, and $R^0$ are the same as described above, and at least one of all the $R^b$s included in the cellulose derivative (II) is the group represented by Formula (b-1) or the group represented by Formula (b-2);

[2] deprotecting an imino group or an amino group of the cellulose derivative (II) to produce a cellulose derivative (III) having a repeating unit represented by Formula (III):

[Chem. 6]

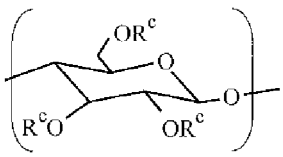

(III)

where each $R^c$ is identical or different and represents a hydrogen atom or a group represented by Formula (c-1) or a group represented by Formula (c-2),

[Chem. 7]

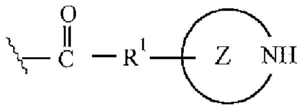

(c-1)

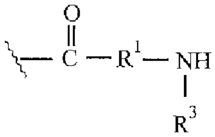

(c-2)

where ring Z, $R^1$, and $R^3$ are the same as described above, and at least one of all the $R^c$s included in the cellulose derivative is the group represented by Formula (c-1) or the group represented by Formula (c-2), and the group represented by Formula (c-1) or Formula (c-2) may form a salt,

[3] reacting the cellulose derivative (III), in the presence of a sulfur compound, with a quaternary ammonium compound represented by Formula (3) to produce the cellulose derivative (I) having the repeating unit represented by Formula (I):

$$N^+(R^2)_4X^- \qquad (3),$$

where each $R^2$ represents an alkyl group having from 1 to 10 carbons, and $X^-$represents a counter anion, four $R^2$s may be identical or different; and

[Chem. 8]

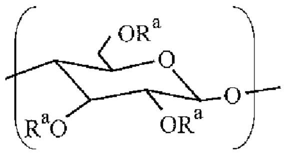

(I)

where each $R^a$ is identical or different and represents a hydrogen atom or a group represented by Formula (a-1) or a group represented by Formula (a-2),

[Chem. 9]

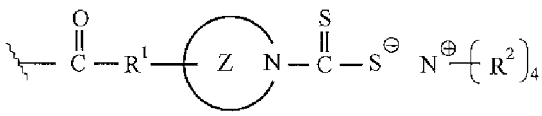

(a-1)

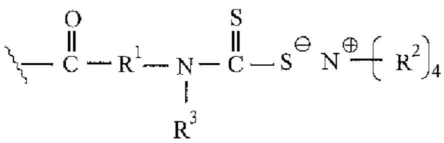

(a-2)

where ring Z, $R^1$, $R^2$, $R^3$ are the same as described above, and at least one of all the $R^a$s included in the cellulose derivative is the group represented by Formula (a-1) or the group represented by Formula (a-2).

Advantageous Effects of Invention

The selenious acid adsorbent according to the present disclosure is made of a low environmental load material

cellulose as a raw material. Further, the selenious acid adsorbent has characteristics of easily adsorbing selenious acid but hardly adsorbing other anions (e.g., a halogen ion, a sulfite ion, a sulfate ion, a phosphate ion).

Among cellulose derivatives having a repeating unit represented by Formula (I), a cellulose derivative having a group represented by Formula (a-1) as $R^a$ is excellent in storage stability. Thus, when the cellulose derivative is used, a selenious acid adsorbent having excellent storage stability can be produced.

Utilization of the selenious acid adsorbent makes it possible to selectively recover selenious acid from a medium in which selenious acid coexists with anions such as a halogen ion, a sulfite ion, a sulfate ion, and a phosphate ion, such as desulfurizer wastewater from a coal-fired power plant.

Further, combustion of the selenious acid adsorbent does not produce problematic exhaust fumes. Thus, through the combustion of the selenious acid adsorbent to which selenious acid has been adsorbed, the selenious acid can be easily recovered. Furthermore, the selenious acid adsorbent to which the selenious acid has been adsorbed is combusted, and thus it is possible to reduce the volume of waste and the cost of disposal for landfill or the like.

Brief Description of Drawings

FIG. 1 is a diagram of an IR spectrum of DMC-Pro obtained in Example 1.

FIG. 2 is a diagram of an IR spectrum of DMC-2 obtained in Example 2.

FIG. 3 is a diagram indicating a selenious acid recovery percentage as well as selenious acid and selenic acid recovery percentages in the presence of sulfuric acid, with respect to the DMC-2 obtained in Example 2 and an adsorbent of Comparative Example.

FIG. 4 is a diagram indicating an effect of pH on the selenious acid and selenic acid recovery percentages in the DMC-Pro obtained in Example 1.

FIG. 5 is a diagram indicating an effect of pH on the selenious acid and selenic acid recovery percentages in the DMC-2 obtained in Example 2.

FIG. 6 is a diagram indicating an adsorption isotherm of selenious acid with respect to the DMC-Pro obtained in Example 1.

FIG. 7 is a diagram indicating an adsorption isotherm of selenious acid with respect to the DMC-2 obtained in Example 2.

FIG. 8 is a diagram indicating an influence of coexisting ions on selenious acid adsorption with respect to the DMC-Pro obtained in Example 1.

FIG. 9 is a diagram indicating an influence of coexisting ions on selenious acid adsorption with respect to the DMC-2 obtained in Example 2.

Description of Embodiments

Selenious Acid Adsorbent

The selenious acid adsorbent of the present disclosure includes the cellulose derivative (I). The "selenious acid adsorbent" is a composition having a function of adsorbing and recovering selenious acid, and can be used, for example, as a treatment agent for wastewater or selenium-containing water. Thus, the selenious acid (including the meaning of selenite or selenite ion) adsorbent of the present disclosure may be a wastewater treatment agent or a selenium-containing water treatment agent.

The selenious acid adsorbent may contain other components, in addition to the cellulose derivative (I), but the proportion of the cellulose derivative (I) is, for example, 50 wt.% or greater, preferably 60 wt.% or greater, particularly preferably 70 wt.% or greater, most preferably 80 wt.% or greater, and especially preferably 90 wt.% or greater, relative to the total amount of the selenious acid adsorbent. When the proportion of the cellulose derivative (I) is less than the range described above, the adsorption capacity of the selenious acid adsorbent tends to decrease.

The form of the selenious acid adsorbent is not particularly limited as long as an effect is exerted, and examples thereof include a powder form, a granular form, a pellet form, a thread form, a film form, and a nonwoven fabric form.

Cellulose Derivative (I)

The cellulose derivative (I) has a repeating unit represented by Formula (I) below.

[Chem. 10]

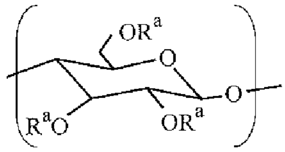

(I)

where each $R^a$ is identical or different and represents a hydrogen atom, a group represented by Formula (a-1), or a group represented by Formula (a-2), and at least one of all the $R^a$s included in the cellulose derivative is a group represented by Formula (a-1) or a group represented by Formula (a-2):

[Chem. 11]

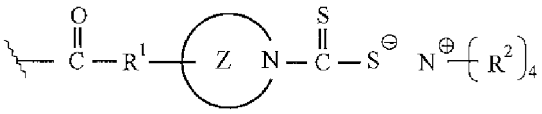

(a-1)

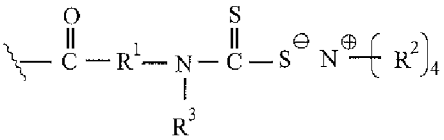

(a-2)

where ring Z represents a heterocycle containing a nitrogen atom as a heteroatom, $R^1$ represents a single bond or an alkylene group having from 1 to 10 carbons, $R^2$ represents an alkyl group having from 1 to 10 carbons, and four $R^2$ are identical or different, and $R^3$ represents a hydrogen atom or an alkyl group having from 1 to 10 carbons.

Ring Z is a heterocycle containing at least one nitrogen atom as a heteroatom. Ring Z may contain two or more nitrogen atoms, or may contain another heteroatom other than the nitrogen atom.

Ring Z is, in particular, preferably a heterocycle containing only a nitrogen atom as a heteroatom (particularly, a non-aromatic heterocycle). Further, ring Z is, for example, a 3 to 10-membered ring, in particular, preferably a 4 to 8-membered ring, and especially preferably a 4 to 6-membered ring.

Examples of ring Z include 5-membered rings such as a pyrrolidine ring; and 6-membered rings such as a piperidine ring and a piperazine ring.

Examples of the alkylene group having from 1 to 10 carbons of $R^1$ include linear or branched alkylene groups, such as a methylene group, a methylmethylene group, a dimethylmethylene group, an ethylene group, a 2-methylethylene group, a 1,2-dimethylethylene group, a propylene group, a trimethylene group, and a 2-methyltrimethylene group.

$R^1$ is preferably a single bond or an alkylene group having from 1 to 2 carbons.

Examples of the alkyl group having from 1 to 10 carbons of $R^2$ and $R^3$ include linear or branched alkyl groups, such as a methyl group, an ethyl group, a propyl group, an isopropyl group, a butyl group, an isobutyl group, an s-butyl group, a t-butyl group, and a pentyl group.

$R^2$ is preferably a single bond or an alkyl group having from 1 to 3 carbons.

$R^3$ is preferably a hydrogen atom.

The group represented by Formula (a-1) is, in particular, preferably a group represented by Formula (a-1-1) below or a group represented by Formula (a-1-2) below. $R^2$ in the formula below is the same as described above.

[Chem. 12]

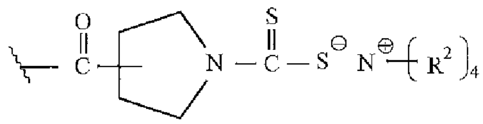

(a-1-1)

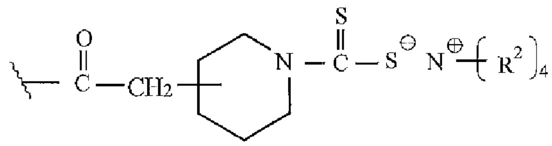

(a-1-2)

The group represented by Formula (a) is, in particular, preferably a group represented by Formula (a-1-1') below or a group represented by Formula (a-1-2') below. $R^1$ in the formula below is the same as described above.

[Chem. 13]

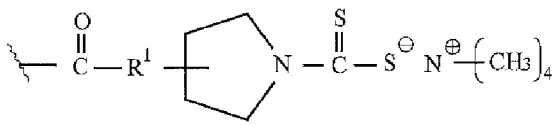

(a-1-1')

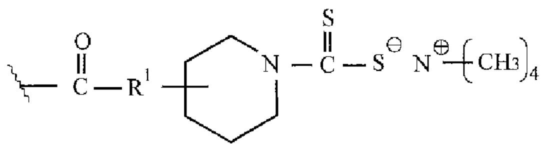

(a-1-2')

The group represented by Formula (a-2) is, in particular, preferably a group represented by Formula (a-2-1) below.

[Chem. 14]

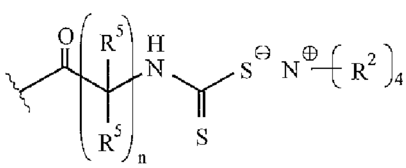

(a-2-1)

where n represents an integer from 1 to 3, and $R^5$ represents a hydrogen atom or an alkyl group having from 1 to 3 carbons, 2n number of $R^5$s may be identical or different, and $R^2$ is the same as described above.

Further, the group represented by Formula (a-2) is preferably the group represented by Formula (a-2-1) above, i.e., a group where n is 2 in the formula.

The group represented by Formula (a-2) is more preferably a group represented by Formula (a-2-1') below.

[Chem. 15]

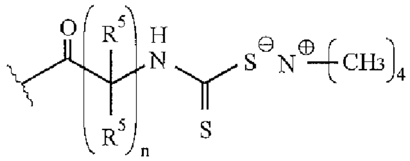

(a-2-1')

where n represents an integer from 1 to 3, and $R^5$ represents a hydrogen atom or an alkyl group having from 1 to 3 carbons, and 2n number of $R^5$s may be identical or different.

Further, the group represented by Formula (a-2) is preferably the group represented by Formula (a-2-1') above, i.e., a group where n is 2 in the formula.

The group represented by Formula (a-2) is particularly preferably a group represented by Formula (a-2-2) or (a-2-3) below, and is, in particular, preferably a group represented by Formula (a-2-3) below. $R^2$ in the formula below is the same as described above.

[Chem. 16]

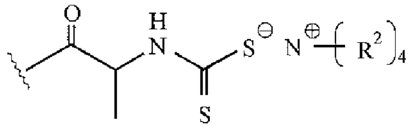

(a-2-2)

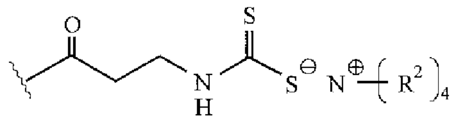

(a-2-3)

The group represented by Formula (a-2) is most preferably a group represented by Formula (a-2-2') or (a-2-3') below, and is, in particular, preferably a group represented by Formula (a-2-3') below:

[Chem. 17]

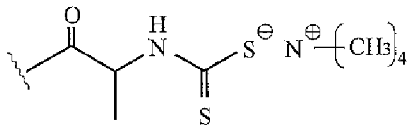

(a-2-2')

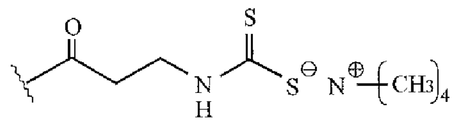

(a-2-3')

A total degree of substitution of the group represented by Formula (a-1) and the group represented by Formula (a-2) (average value of sum of degrees of substitution of hydrogen atoms of hydroxyl groups at 2, 3 and 6 positions of glucose units constituting cellulose for the groups) is, for example, from 0.1 to 3.0, preferably from 1.0 to 3.0, and particularly preferably from 2.0 to 3.0. When the cellulose derivative (I) contains the groups in the above-described range, the cellulose derivative exhibits a particularly excellent adsorption capability for selenious acid, and thus is preferred.

The cellulose derivative (I) has the group represented by Formula (a-1) above and the group represented by Formula (a-2) above, and a selenite ion (Se(=O)-$OH^-$) binds to a dithiocarbamate group site in those groups. As a result, the selenious acid is adsorbed to the cellulose derivative (I).

Meanwhile, anions (e.g., a halogen ion, a sulfite ion, a sulfate ion, or a phosphate ion) other than the selenite ion are more stable than the selenite ion, and therefore do not bind to the group represented by Formula (a-1) and the

group represented by Formula (a-2) in the cellulose derivative (I), unlike the case of the selenite ion.

Accordingly, the selenious acid adsorbent of the present disclosure containing the cellulose derivative (I) can selectively adsorb and efficiently recover the selenite ion in an environment where the selenious acid coexists with the anions (the concentration of the coexisting anions is, for example, 5 mol/L or less, and the lower limit value of the concentration of coexisting anions is, for example, 1 mol/L, preferably 2 mol/L, particularly preferably 3 mol/L).

A (saturated) adsorption capacity for selenious acid in an environment where selenious acid coexists with the anions is, for example, 300 μmol/g or greater, preferably 500 μmol/g or greater, more preferably 650 μmol/g or greater, still more preferably 700 μmol/g or greater, particularly preferably 1000 μmol/g or greater, and most preferably 1300 μmol/g or greater.

A recovery percentage of selenious acid in an environment where the selenious acid coexists with the anions is, for example, 85% or greater, preferably 90% or greater, particularly preferably 95% or greater, and most preferably 98% or greater.

An adsorption capacity for the anions in an environment where the selenious acid coexists with the anions is, for example, 200 μmol/g or less, preferably 100 μmol/g or less, more preferably 50 μmol/g or less, still more preferably 10 μmol/g or less, and particularly preferably 5 μmol/g or less.

A recovery percentage of the anions in an environment where the selenious acid coexists with the anions is, for example, 10% or less, preferably 5% or less, and particularly preferably 2% or less.

In the present disclosure, the recovery percentage of selenious acid by the cellulose derivative (I) is a recovery percentage of selenious acid in a case where 5 mg of the cellulose derivative (I) is immersed in a solution (pH 4) having a selenious acid concentration of 100 μmol/L at 25°C and stirred at 200 rpm for 1 hour. Then, the recovery percentage of selenious acid is calculated from the Eq. described in Examples.

In addition, when the cellulose derivative (I) has the group represented by Formula (a-1) above, the strain of ring Z (e.g., a heterocycle such as piperidine or pyrrolidine) suppresses the proton transfer to a nitrogen atom as a starting point of decomposition of a dithiocarbamate group. Thus, decomposition of the group represented by Formula (a-1) above is suppressed. Therefore, use of the cellulose derivative (I) having the group represented by Formula (a-1) above enables production of a selenious adsorbent having excellent storage stability. For example, even after subjected to a test in which the cellulose derivative is left stand in an air atmosphere at 40°C for 2 weeks, the cellulose derivative still possesses the selenious acid recovery capacity as high as the selenious acid recovery capacity before the test. The retention rate of selenious acid recovery is, for example, 95% or greater.

Method for Recovering Selenious Acid

When the selenious acid adsorbent (or the cellulose derivative (I)) is used, the cellulose derivative (I) is brought into contact with selenious acid, and thus the selenious acid can be adsorbed onto the cellulose derivative (I), and the selenious acid can be selectively recovered.

When the cellulose derivative (I) has the group represented by Formula (a-1), a selenite ion ($Se(=O)-OH^-$) binds to a dithiocarbamate group moiety in the group represented by Formula (a-1). As a result, selenious acid is adsorbed to the cellulose derivative. When the cellulose derivative (I) has the group represented by Formula (a-2), a similar reaction proceeds.

Since the selenium atom weakly binds to the OH group, the selenite ion easily binds to the dithiocarbamate group moiety. However, the sulfur atom and the phosphorus atom strongly binds to the OH group. Thus, a sulfite ion, a sulfate ion, and a phosphate ion hardly bind to the dithiocarbamate group moiety. In addition, the halogen ion is an anion, and thus it hardly binds to the dithiocarbamate group moiety. Consequently, the cellulose derivative (I) can selectively adsorb and recover the selenious acid even in an environment where a selenite ion coexists with at least one anion selected from a sulfite ion, a sulfate ion, a phosphate ion, and a halogen ion.

The method for allowing selenious acid to be adsorbed onto the cellulose derivative (I) is not particularly limited, and examples thereof include a method including filling the cellulose derivative (I) into a column or the like, and passing a medium containing selenious acid (e.g., wastewater containing selenious acid) through the column, and a method including adding the cellulose derivative (I) to the medium and stirring the mixture.

In the recovery of the selenious acid, it is preferable to adjust the pH of the cellulose derivative (I) to, for example, a range of 1 to 7 (preferably a range of 2 to 6, particularly preferably a range of 3 to 5) from the viewpoint that the binding of the cellulose derivative (I) to the selenious acid can be promoted and the selenious acid can be more efficiently recovered. The pH can be adjusted using a well-known and commonly used pH adjuster (an acid such as nitric acid or an alkali such as sodium hydroxide).

It is not possible to recover selenic acid through the binding of the cellulose derivative (I) to selenic acid. However, in a case where selenic acid is reduced to selenious acid using a reducing agent or a current, selenious acid can be recovered through the binding of the cellulose derivative (I) to the selenious acid.

Examples of the reducing agent include thiourea; sulfurous acid gas, sulfurous acid; trivalent or divalent titanium

compounds such as titanium trichloride, titanium sulfate, titanium chloride, and titanium nitrate; copper; sulfate, nitrate, and chloride of copper; iron; sulfate, nitrate, and chloride of iron; zinc; sulfate, nitrate, and chloride of zinc; iron-based metal fibers such as steel wool; hydrazine; and aluminum. One of these can be used alone or two or more in combination.

Wastewater Treatment Method

The wastewater treatment method of the present disclosure is a method including: bringing wastewater containing selenious acid into contact with the selenious acid adsorbent, causing the selenious acid in the wastewater to be adsorbed onto the selenious acid adsorbent, and removing the selenious acid from the wastewater.

The wastewater treatment method may be a method including: bringing wastewater containing selenious acid into contact with the cellulose derivative (I), causing the selenious acid in the wastewater to be adsorbed onto the cellulose derivative (I), and removing the selenious acid from the wastewater.

The method including bringing wastewater containing selenious acid into contact with the selenious acid adsorbent (or the cellulose derivative (I)) is not particularly limited. For example, when the selenious acid adsorbent (or the cellulose derivative (I)) forms a filter or is packed in a column, the wastewater containing selenious acid is allowed to pass through the filter or the column, as a result of which the selenious acid can be brought into contact with the selenious acid adsorbent.

According to the wastewater treatment method, the selenious acid can be selectively removed from wastewater containing selenious acid, and the concentration of selenious acid in the wastewater can be reduced to equal to or less than the wastewater standard value.

In addition, through the combustion of the selenious acid adsorbent (or the cellulose derivative (I)) to which the selenious acid has been adsorbed, the selenious acid can be easily recovered. Further, because of the combustion, it is possible to reduce the volume of waste and the cost of landfill or the like.

Wastewater Treatment Apparatus

The wastewater treatment apparatus of the present disclosure includes the selenious acid adsorbent. The wastewater treatment apparatus has a function of bringing wastewater containing selenious acid into contact with the included selenious acid adsorbent, causing the selenious acid to be adsorbed onto the selenious acid adsorbent, and removing the selenious acid from the wastewater.

The wastewater treatment apparatus included the cellulose derivative (I), and may have a function of bringing wastewater containing selenious acid into contact with the cellulose derivative (I), causing the selenious acid to be adsorbed onto the cellulose derivative (I) and removing the selenious acid from the wastewater.

The wastewater treatment apparatus includes a device capable of performing wastewater treatment by the wastewater treatment method.

The method by which the wastewater treatment apparatus includes the selenious acid adsorbent is not particularly limited, and for example, a filter including the selenious acid adsorbent may be included, or a column packed with the selenious acid adsorbent may be included.

The method including bringing wastewater containing selenious acid into contact with the selenious acid adsorbent (or the cellulose derivative (I)) included in the wastewater treatment apparatus is not particularly limited. For example, when the selenious acid adsorbent (or the cellulose derivative (I)) forms a filter or is packed in a column, the wastewater containing selenious acid is allowed to pass through the filter or the column, as a result of which the selenious acid can be brought into contact with the selenious acid adsorbent.

According to the wastewater treatment apparatus, the selenious acid can be selectively recovered and removed from wastewater containing selenious acid, and the concentration of selenious acid in the wastewater can be reduced to equal to or less than the wastewater standard value.

In addition, through the combustion of the selenious acid adsorbent (or the cellulose derivative (I)) to which the selenious acid has been adsorbed, the selenious acid can be easily recovered. Further, because of the combustion, it is possible to reduce the volume of waste and the cost of landfill or the like.

Method for Producing Selenious Acid Adsorbent

The selenious acid adsorbent can be produced, for example, by performing the following steps [1], [2] and [3] to prepare the above-described cellulose derivative (I), and using the prepared cellulose derivative (I).

[Chem. 18]

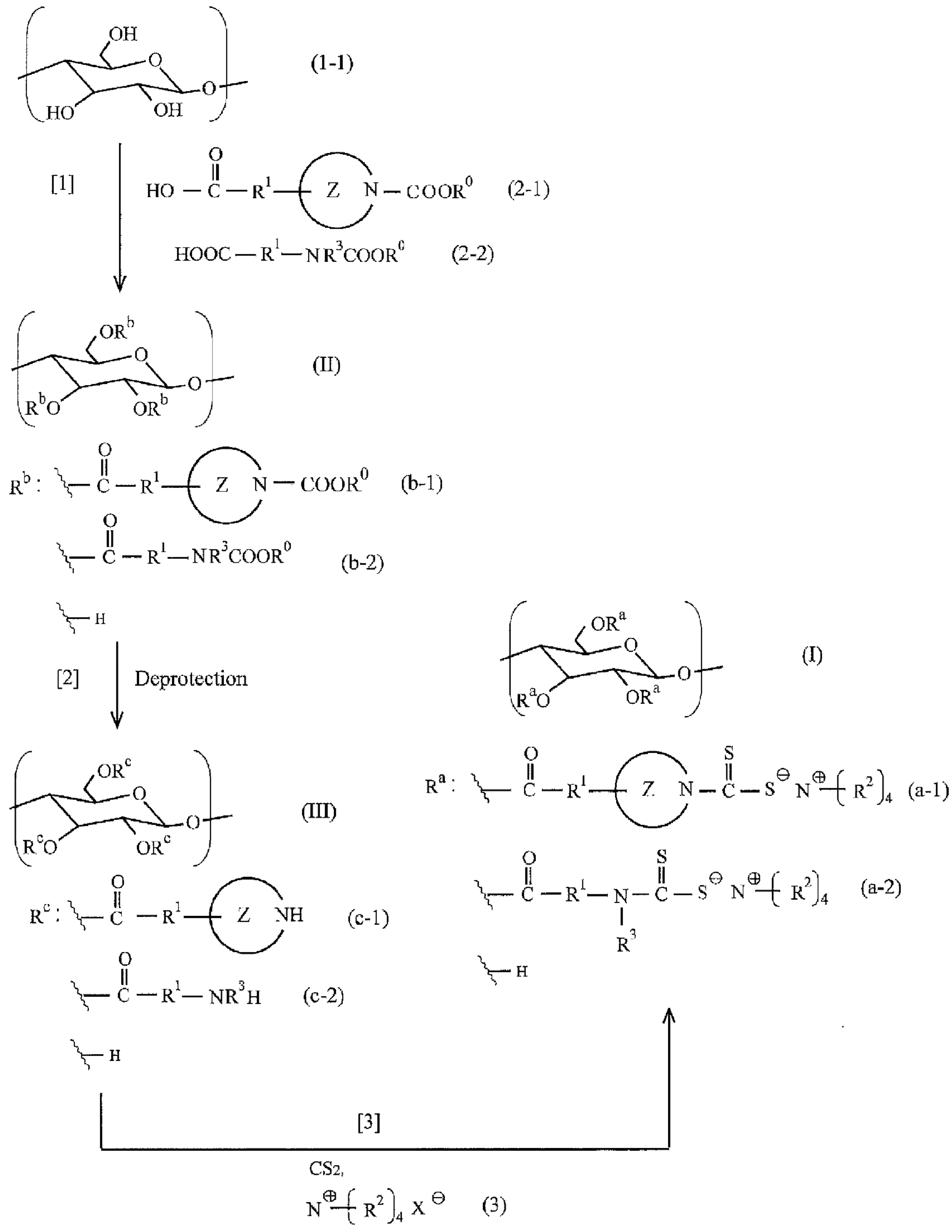


where $R^1$, $R^2$, $R^3$, ring Z and $R^a$ in the above formula are the same as those described above.

$R^0$ in the above formula represents a monovalent hydrocarbon group or a monovalent heterocyclic group.

The hydrocarbon group includes aliphatic hydrocarbon groups, alicyclic hydrocarbon groups, aromatic hydrocarbon groups, and groups obtained by bonding these.

Examples of the aliphatic hydrocarbon group include alkyl groups having from 1 to 10 carbons (particularly preferably from 1 to 3 carbons) such as a methyl group, an ethyl group, a propyl group, an isopropyl group, a butyl group, an isobutyl group, an s-butyl group, a t-butyl group, a pentyl group, a hexyl group, and a decyl group; and alkenyl groups having from 2 to 10 carbons (particularly preferably from 2 to 3 carbons) such as a vinyl group, an allyl group, and a 1-butenyl group.

Examples of the alicyclic hydrocarbon group include 3- to 10-membered (particularly preferably 5- to 8-membered) cycloalkyl groups, such as a cyclopropyl group, a cyclobutyl group, a cyclopentyl group, a cyclohexyl group and a cyclooctyl group; 3- to 15-membered (particularly preferably 5- to 8-membered) cycloalkenyl groups, such as a cyclopentenyl group and a cyclohexenyl group; and bridged cyclic hydrocarbon groups, such as a perhydronaphthalen-1-yl group, a norbornyl group, an adamantyl group, a tricyclo[5.2.1.$0^{2,6}$]decan-8-yl group, and a tetracyclo[4.4.0.$1^{2,5}$.$1^{7,10}$]dodecan-3-yl group.

Examples of the aromatic hydrocarbon group include aryl groups having from 6 to 20 carbons such as a phenyl group, a naphthyl group, and an anthracenyl group. The aromatic ring constituting the aromatic hydrocarbon group may form a condensed ring with another ring (e.g., an alicyclic ring or the like). Examples of the group including such a condensed ring include a fluorene group, and the like.

The heterocyclic group has the heterocycle structure with one hydrogen atom removed. The heterocycles include aromatic heterocycles and non-aromatic heterocycles. Examples of the heterocycles include a 3 to 10-membered (preferably 4 to 6-membered) ring having carbon atoms and at least one heteroatom (e.g., oxygen atom, sulfur atom, and nitrogen atom) as atoms constituting the ring, and a condensed ring thereof. Specific examples thereof include heterocycles containing an oxygen atom as a heteroatom (e.g., 3-membered rings, such as an oxirane ring; 4-membered rings, such as an oxetane ring; 5-membered rings, such as a furan ring, a tetrahydrofuran ring, an oxazole ring, an isoxazole ring, and a γ-butyrolactone ring; 6-membered rings, such as a 4-oxo-4H-pyran ring, a tetrahydropyran ring, and a morpholine ring; condensed rings, such as a benzofuran ring, an isobenzofuran ring, a 4-oxo-4H-chromene ring, a chroman ring, and an isochroman ring; crosslinked rings, such as a 3-oxatricyclo[4.3.1.$1^{4,8}$]undecan-2-one ring and a 3-oxatricyclo[4.2.1.$0^{4,8}$]nonan-2-one ring), heterocycles containing a sulfur atom as a heteroatom (e.g., 5-membered rings, such as a thiophene ring, a thiazole ring, an isothiazole ring, and a thiadiazole ring; and 6-membered rings, such as a 4-oxo-4H-thiopyran ring; condensed rings, such as a benzothiophene ring), and heterocycles containing a nitrogen atom as a heteroatom (e.g., 5-membered rings, such as a pyrrole ring, a pyrrolidine ring, a pyrazole ring, an imidazole ring, and a triazole ring; 6-membered rings, such as an isocyanuric ring, a pyridine ring, a pyridazine ring, a pyrimidine ring, a pyrazine ring, a piperidine ring, and a piperazine ring; condensed rings, such as an indole ring, an indoline ring, a quinoline ring, an acridine ring, a naphthyridine ring, a quinazoline ring, and a purine ring).

The hydrocarbon groups or heterocyclic groups may include a substituent of various types (such as a halogen atom, an oxo group, a hydroxyl group, a substituted oxy group (e.g., an alkoxy group, an aryloxy group, an aralkyloxy group, and an acyloxy group), a carboxyl group, a substituted oxycarbonyl group (such as an alkoxycarbonyl group, an aryloxycarbonyl group, and an aralkyloxycarbonyl group), a substituted or unsubstituted carbamoyl group, a cyano group, a nitro group, a substituted or unsubstituted amino group, and a sulfo group).

Each $R^b$ in the above formula is identical or different and represents a hydrogen atom or a group represented by Formula (b-1) or Formula (b-2) above. At least one of all the $R^b$s included in the cellulose derivative (II) is a group represented by Formula (b-1) or (b-2) above.

Each $R^c$ in the above formula is identical or different and represents a hydrogen atom or a group represented by Formula (c-1) or (c-2) above. At least one of all the $R^c$s included in the cellulose derivative (III) is a group represented by Formula (c-1) or (c-2) above. Further, the group represented by Formula (c-1) or (c-2) above may form a salt.

The step [1] is a process of reacting the compound represented by Formula (2-1) above (hereinafter sometimes referred to as "imino acid (2-1)) and/or the compound represented by Formula (2-2) above (hereinafter sometimes referred to as "amino acid (2-2)") with a hydroxyl group of a cellulose (1-1) (which is the compound having a repeating unit represented by Formula (1-1) above).

The imino acid (2-1) is a compound in which an imino group of an imino acid is protected with a carbamate-based protecting group ($COOR^0$ group) (or a compound in which a secondary amino group of a cyclic amino acid is protected with a carbamate-based protecting group). Examples of the imino acid include proline, 3-pyrrolidinecarboxylic acid, 2-piperidinecarboxylic acid, 4-piperidinecarboxylic acid, and (4-piperidinyl)acetic acid.

The amino acid (2-2) is a compound in which an amino group of an amino acid is protected with a carbamate-based protecting group ($COOR^0$ group). Examples of the amino acid include chain amino acids such as glycine, L-alanine, β-alanine, 4-aminobutyric acid, 5-aminopentanoic acid, and 7-aminoheptanoic acid.

As the carbamate-based protecting group, in particular, a t-butoxycarbonyl group (Boc), a benzyloxycarbonyl group (CBZ), a 9-fluorenylmethyloxycarbonyl group (Fmoc), or the like is preferred in that these groups can be deprotected under mild conditions.

As the cellulose (1-1) used in the step [1], for example, a cellulose derived from wood pulp (softwood pulp, hardwood pulp) or cotton linter pulp, or the like can be preferably used. One of these can be used alone or two or more in combination. The cellulose may be crystalline or amorphous. The pulp may contain a different component such as hemicellulose. The cellulose derived from pulp is preferably used in a finely ground form, which can be prepared, for example, by performing a process of disintegration.

The reaction of the cellulose (1-1) with the imino acid (2-1) and/or the amino acid (2-2) is preferably carried out in the presence of a catalyst. Examples of the catalyst include triethylamine, pyridine, and N,N-dimethyl-4 aminopyridine (DMAP). One of these can be used alone or two or more in combination.

The amount of the catalyst used is, for example, approximately from 0.01 to 1.0 mol per mole of the total amount of the imino acid (2-1) and the amino acid (2-2).

The reaction is preferably carried out in the presence of a condensing agent. Examples of the condensing agent include 1-ethyl-3-(3-dimethylaminopropyl)carbodiimide hydrochloride (EDC-HCl), N,N'-dicyclohexylcarbodiimide, and N,N'-diisopropylcarbodiimide. One of these can be used alone or two or more in combination.

The amount of the condensing agent used is, for example, approximately from 0.01 to 1.0 mol per mole of the total amount of the imino acid (2-1) and the amino acid (2-2).

The reaction is preferably carried out in the presence of a solvent. Examples of the solvent include aliphatic hydrocarbons such as hexane, heptane, and octane; alicyclic hydrocarbons such as cyclohexane; aromatic hydrocarbons such as benzene, toluene, xylene, and ethylbenzene; halogenated hydrocarbons such as chloroform, dichloromethane, and 1,2-dichloroethane; ethers such as diethyl ether, dimethoxyethane, tetrahydrofuran, and dioxane; ketones such as acetone, methyl ethyl ketone, and methyl isobutyl ketone; esters such as methyl acetate, ethyl acetate, isopropyl acetate, and butyl acetate; amides such as N,N-dimethylformamide, N,N-dimethylacetamide, and N-methylpyrrolidone; nitriles such as acetonitrile, propionitrile, and benzonitrile; alcohols such as methanol, ethanol, isopropyl alcohol, and butanol; and dimethylsulfoxide. One of these can be used alone or two or more in combination.

As the solvent, in particular, an amide such as N,N-dimethylacetamide is preferable, and it is particularly preferable to use a mixture of the solvent with a lithium salt such as lithium chloride from the viewpoint of excellent solubility of cellulose. A concentration of the lithium salt in the solvent can be appropriately adjusted as long as the effect of dissolving cellulose is not impaired, and is, for example, approximately from 1 to 30 wt.%.

The amount of the solvent used is, for example, approximately from 0.5 to 30 times (in weight) the total amount of the reaction base substances. The solvent, when used in an amount greater than the above range, decreases concentrations of the reaction components, and tends to decrease the reaction rate.

The cellulose derivative (II) having a repeating unit represented by Formula (II) above is produced through the step [1].

The step [2] is a process of deprotecting the imino group and/or the amino group of the cellulose derivative (II) produced through the step [1] (more specifically, a process of removing the protecting group of the imino group in the group represented by Formula (b-1) or the amino group in the group represented by Formula (b-2) which has been introduced into the cellulose derivative (II)).

The method for removing the protecting group of the imino group and/or the amino group of the cellulose derivative (II) can be appropriately selected depending on the type of protecting group.

For example, in the case of the cellulose derivative (II) including the protecting group: BOC or the like, the protecting group can be removed by reaction with strong acids such as hydrochloric acid and trifluoroacetic acid. Further, in the cellulose derivative (III) prepared by deprotection using a strong acid, there may be a case where the group represented by Formula (c-1) and/or the group represented by Formula (c-2) may form a salt with a counter anion. For example, in the case of reaction with trifluoroacetic acid as a strong acid, there may be a case where an imino group at the end of the group represented by Formula (c-1) or an amino group at the end of the group represented by Formula (c-2) forms a salt with $CF_3COO^-$.

For example, when CBZ is included as a protecting group, the protecting group can be removed by performing a reduction reaction in the presence of a catalyst (e.g., Pd-C).

For example, when Fmoc is included as a protecting group, the protecting group can be removed by the reaction with a secondary amine such as pyridine.

The reaction temperature in the step [2] is, for example, approximately 0 to 100°C. The reaction time is, for example, approximately from 1 to 24 hours. After completion of the reaction, the resulting reaction product can be separated and purified by a separation means, such as filtration, concentration, distillation, extraction, crystallization, adsorption, recrystallization, or column chromatography; or a separation means in combination of these.

The cellulose derivative (III) having a repeating unit represented by Formula (III) above is produced through the step [2].

The step [3] is a process of reacting the cellulose derivative (III) produced through the step [2], in the presence of a sulfur compound, with a quaternary ammonium compound represented by Formula (3) above.

$R^2$ in Formula (3) corresponds to $R^2$ in Formula (a) above. $X^-$ in Formula (3) represents a counter anion, and examples thereof include $OH^-$, $Cl^-$, $Br^-$, $I^-$, $F^-$, $SO_4^{2-}$, $BH_4^-$, $BF_4^-$, $PF_6^-$.

Examples of the quaternary ammonium compound include tetramethylammonium hydroxide and tetraethylammonium hydroxide.

The amount of the quaternary ammonium compound used is, for example, 50 parts by weight or greater relative to 100 parts by weight of the cellulose derivative (III).

Examples of the sulfur compound include carbon disulfide. The amount of the sulfur compound used is, for example, 20 parts by weight or greater relative to 100 parts by weight of the cellulose derivative (III).

The reaction in the step [3] is preferably carried out in the presence of a solvent. Examples of the solvent include aromatic hydrocarbons such as toluene, xylene, and ethyl benzene; alcohols such as methanol, ethanol, 2-propanol, isopropyl alcohol, and butanol; N-methyl pyrrolidone, dimethylsulfoxide, and N,N-dimethylformamide. Of these, a single

type may be used alone, or two or more types thereof may be used in combination. The amount of the solvent used is, for example, approximately from 0.5 to 30 times (in weight) the total amount of the reaction base substances.

The reaction temperature in the step [3] is, for example, approximately from 0 to 100°C. The reaction time is, for example, approximately from 1 to 24 hours. After completion of the reaction, the resulting reaction product can be separated and purified by a separation means, such as filtration, concentration, distillation, extraction, crystallization, adsorption, recrystallization, or column chromatography; or a separation means in combination of these.

Each of the configurations, their combinations, and the like of the present disclosure above is an example, and addition, omission, substitution, and change of the configuration can be appropriately made without departing from the gist of the present disclosure. Further, the present disclosure is not limited by the embodiments and is limited only by the disclosure of the claims.

Examples

Hereinafter, the present disclosure will be described more specifically with reference to examples, but the present disclosure is not limited by these examples.

Example 1 (Preparation of Adsorbent (1))

A two-neck eggplant-shaped flask was charged with the cellulose (1-1) (0.501 g, 3.08 mmol) and dried in vacuo at 90°C for 2 hours. In a nitrogen atmosphere, N,N-dimethylacetamide (15 mL) and lithium chloride (0.99 g) were added to dissolve the cellulose. N,N-dimethyl-4 aminopyridine (2.26 g, 18.5 mmol), N-Boc-L-proline (3.98 g, 18.5 mmol), 1-ethyl-3-(3-dimethylaminopropyl)carbodiimide hydrochloride (EDC-HCl) (3.55 g, 18.5 mmol) and N,N-dimethylacetamide (15 mL) were added to this reaction container, and then the mixture was stirred at room temperature for 24 hours. The reaction solution was poured into water and subjected to reprecipitation to form a solid. The solid was collected by suction filtration. The resulting solid was dissolved in ethanol, reprecipitated with water, and collected by suction filtration. The solid was dried in vacuo to yield a compound having a repeating unit represented by Formula below (DMC-Pro-II) (1.81 g, yield 78%) as a white solid.

From the result of $^1$H-NMR measurement, the total average degree of substitution of N-Boc-L-proline was calculated to be 3.0.

[Chem. 19]

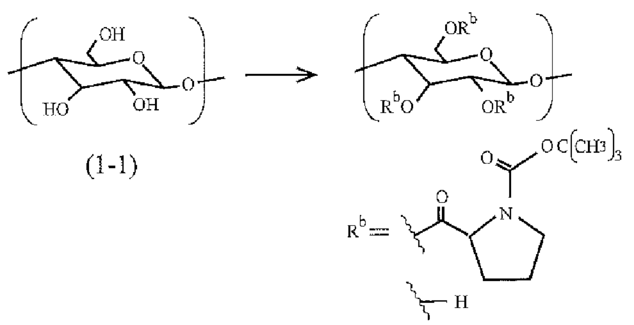

(1-1)

DMC-Pro-II

(DMC-Pro-II)

$^1$H-NMR (500 MHz, $CDCl_3$, 55°C):δ4.00-5.30 (br, 8H), 2.95-4.00 (br, 8H), 1.60-2.56 (br, 12H), 1.43 (br, 27H)

Trifluoroacetic acid (6.6 mL) and the compound (DMC-Pro-II) (1.00 g, 1.33 mmol) were added to a two-neck eggplant-shaped flask under a nitrogen atmosphere, and the mixture was stirred at room temperature for 7.5 hours. The solid precipitated by reprecipitation using diethyl ether was collected by centrifugation, and washed with diethyl ether. The resulting solid was dried in vacuo to yield a salt of a compound (DMC-Pro-III) having a repeating unit represented by Formula below as a white solid (979 mg, 92% yield). The results of $^1$H-NMR measurement of DMC-Pro-III are indicated below.

[Chem. 20]

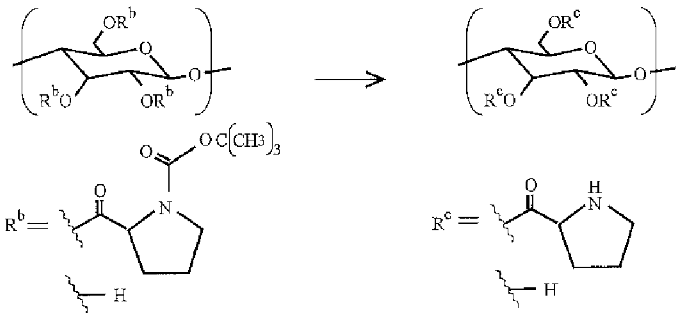

DMC-Pro-II DMC-Pro-III

(DMC-Pro-III)

$^1$H-NMR (500 MHz, D2O, r.t.):δ 5.24 (br, 1H), 4.91 (br, 1H), 4.80 (br, overlapped with HDO), 4.45 (br, 3H), 4.21 (br, 1H), 4.06 (br, 1H), 3.81 (br, 1H), 3.67 (br, 1H), 3.32(br, 6H), 2.18-2.54 (br, 3H), 1.60-2.16 (br, 9H)

A salt of the DMC-Pro-III (0.500 g, 0.628 mmol) was dissolved in dimethylsulfoxide (3.1 mL) in a two-neck eggplant-shaped flask under a nitrogen atmosphere, and carbon disulfide (0.57 mL, 9.4 mmol) was added. The mixture was cooled to about 10°C under light-shielding, a solution of tetramethylammonium hydroxide (10% in methanol) (3.77 mL, 3.77 mmol) was added dropwise, and the resulting solution was stirred for 7 hours while the temperature was increased to room temperature. The solid yielded by reprecipitation in ethanol was collected by centrifugation, and washed with ethanol. The resulting solid was dried in vacuo to yield a cellulose derivative having a repeating unit represented by Formula below (DMC-Pro) as a white solid (453 mg, 80% yield). DMC-Pro was used as an adsorbent (1).

[Chem. 21]

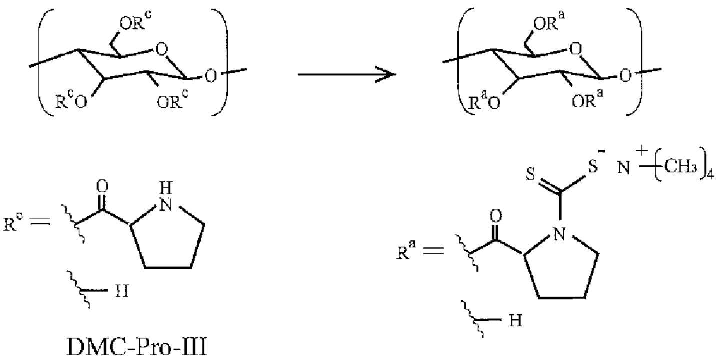

DMC-Pro-III DMC-Pro

(DMC-Pro)

$^1$H-NMR (500 MHz, D2O, r.t.):δ 4.40-5.70 (br, overlapped with HDO), 3.35-4.40 (br), 3.15 (br, $CH_3$), 1.20-2.85 (br)

Example 2 (Preparation of Adsorbent (DMC-2))

Cellulose derivatives (DMC-2-II, yield: 81%), (DMC-2-III, yield: 87%), and (DMC-2, yield: 73%) were yielded in the same manner as in Example 1 except that N-Boc-β-alanine was used in place of N-Boc-L-proline. DMC-2 was used as an adsorbent (2).

From the result of $^1$H-NMR measurement, the total average degree of substitution of N-Boc-β-alanine was calculated to be 3.0.

[Chem. 22]

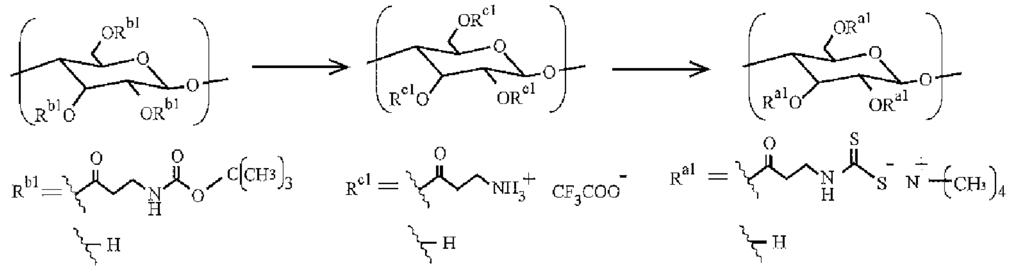

DMC-2-II DMC-2-III DMC-2

(DMC-2-II)

$^1$H-NMR (500 MHz, $CDCl_3$, 55°C): δ 5.42 (br, 1H), 5.31 (br, 2H), 5.08 (br, 1H), 4.75 (br, 1H), 4.55 (br, 1H), 4.48 (br, 1H), 4.07 (br, 1H), 3.75 (br, 1H), 3.63 (br, 1H), 3.31-3.43 (m, 6H, $CH_2$), 2.44-2.59 (m, 6H, $CH_2$), 1.44 (br, 27H, $CH_3$)

(DMC-2-III)

$^1$H-NMR (500 MHz, DMSO-$d_6$, 80°C):δ 5.04 (br, 1H, CH), 4.67 (br, 2H, CH), 4.44 (br, 1H, CH), 4.08 (br, 1H, CH), 3.74 (br, 2H, CH), 2.68-3.14 (m, 12H, $CH_2$)

Adsorption Capacity for Selenious Acid

The adsorption capacity of the adsorbents (1) and (2) obtained in Examples for selenious acid was evaluated by the following method (batch method). The result is indicated in Table 1 below.

0.01 g of the adsorbent and 10 mL of a selenious acid solution (2 mmol/L) having a pH of 4.0 were added to a 100-mL centrifugation tube, and the tube was agitated at 25°C and 200 rpm for 1 hour.

After the agitation, the content in the centrifuge tube was filtered through a membrane filter (nitrocellulose, pore size: 0.45 μm), and the concentration of selenium in the filtrate ($C_e$: mol/L) was quantified by inductively coupled plasma (ICP) optical emission spectrometer (iCAP6300, manufactured by Thermo Fischer Scientific, Waltham, Massachusetts). The initial concentration of selenium in the solution was defined as $C_0$ (μmol/L), the initial fluid volume of the selenious acid solution was defined as Vo (L), the weight of the adsorbent used was defined as m (g), and the adsorption capacity (μmol/g) was calculated from the following Eq.:

$$\text{Adsorption capacity} = (C_0 - C_e) \times V_0/m$$

In addition, as Comparative Example 1, the selenium adsorption capacity of the methyl acrylate/tetraethylenepentamine polymer (hereinafter sometimes referred to as "Acrylic-DTC") having a dithiocarbamate group described in JP 2015-506274 A is described in Table 1 below.

Table 1

Table 1

| | Adsorbent | Adsorption capacity (μmol/g) | |
|---|---|---|---|
| Example 1 | DMC-Pro | 604 | |
| Example 2 | DMC-2 | 1511 | |
| Comparative Example 1 | Acrylic-DTC | Adsorbent concentration 150 wt.ppm | 84 |
| | | Adsorbent concentration 300 wt.ppm | 97 |

Selectivity for Selenious Acid and Recovery Percentage

With respect to the adsorbent (2) (DMC-2) obtained in Example 2 and the following adsorbents (DOWEX 1X2, CRB03, Epolas, As-01, and Q-10R) as comparative examples, the selectivity for selenious acid and the recovery percentage of selenious acid were evaluated by the following methods.

Specifically, 10 mL of each of the following test solutions 1 to 3 was poured into a 50-mL centrifugation tube, and the adsorbents (10 mg of the adsorbent (2), 50 mg of each of the adsorbents of the comparative examples) were added thereto, and the tube was agitated at 25°C and 200 rpm for 1 hour.

After the agitation, the content in the centrifuge tube was filtered through a membrane filter (nitrocellulose, pore size: 0.45 μm), and the concentration of selenium in the filtrate ($C_e$: mol/L) was quantified by inductively coupled plasma (ICP) optical emission spectrometer (iCAP6300, manufactured by Thermo Fischer Scientific, Waltham, Massachusetts). The initial concentration of selenium in the test solution was defined as $C_0$ (mol/L), the recovery percentage (%) of selenious acid and selenic acid was calculated from the following Eq.:

$$\text{Recovery percentage} = (C_0\text{-}C_e)/C_0 \times 100$$

Test solution 1: a selenious acid solution having a pH of 4 (selenious acid concentration: 100 μmol/L)
Test solution 2: a selenious acid solution having a pH of 4 and containing 1 mol/L of sulfate ions (selenious acid concentration: 100 μmol/L)
Test solution 3: a selenic acid solution having a pH of 4 (selenic acid concentration: 100 μmol/L)

Adsorbents as Comparative Examples

- DOWEX 1X2: a chloride-type anion-exchange resin, a compound represented by the following formula, manufactured by FUJIFILM Wako Pure Chemical Corporation

[Chem. 23]

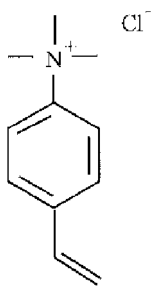

- CRB03: an anion-exchange resin, a compound represented by the following formula, manufactured by Mitsubishi Chemical Corporation

[Chem. 24]

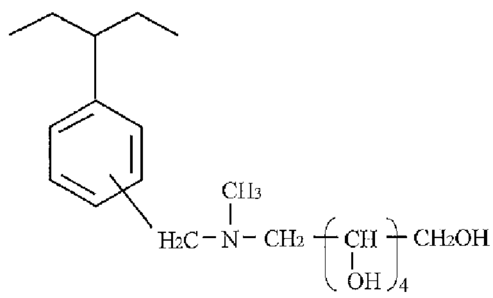

- Epolas: a compound having a repeating unit represented by the following formula, manufactured by Miyoshi Oil & Fat Co., Ltd.

[Chem. 25]

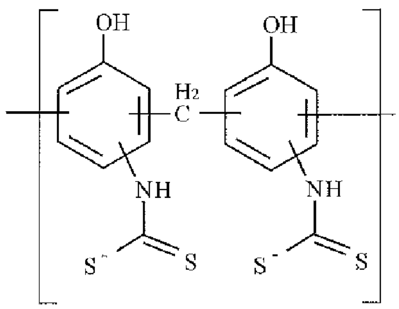

- As-01: silica gel to which a metal-selective molecular recognition group binds, manufactured by GL Sciences Inc.
- Q-10 R: a compound represented by the following formula, manufactured by Daiichi Kasei Co., Ltd.

[Chem. 26]

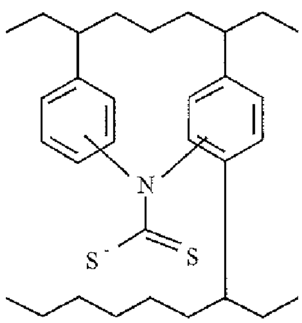

The results are illustrated in FIG. 3. It is clear from FIG. 3 that the adsorbent (2) obtained in Example 2 can efficiently recover selenious acid at a recovery percentage of 97% or greater, in the presence or absence of sulfuric acid.

Effect of pH on Recovery Percentage

1. With respect to the adsorbent (1) obtained in Example 1, the effect of pH on the selenious acid recovery percentage was evaluated by the following methods.

Specifically, 10 mL of a selenious acid solution (selenious acid concentration: 100 μmol/L) containing 1 mol/L

of sulfate ions and having a pH changed within a range of 1 to 11 was poured into a 50-mL centrifugation tube, 10 mg of the adsorbent (1) was added thereto, and the tube was agitated at 25°C and 200 rpm for 1 hour.

After the agitation, the content in the centrifuge tube was filtered through a membrane filter (nitrocellulose, pore size: 0.45 μm), and the concentration of selenious acid in the filtrate ($C_e$: mol/L) was quantified by inductively coupled plasma (ICP) optical emission spectrometer (iCAP6300, manufactured by Thermo Fischer Scientific, Waltham, Massachusetts). The initial concentration of selenious acid in the test solution was defined as $C_0$ (mol/L), the recovery percentage (%) of selenious acid was calculated from the following Eq.:

$$\text{Recovery percentage} = (C_0\text{-}C_e)/C_0 \times 100$$

In addition, the effect of pH on the selenic acid recovery percentage was evaluated in the same manner as described above except that a selenic acid solution (selenic acid concentration: 100 μmol/L) containing 1 mol/L of sulfate ions was used in place of the selenious acid solution.

The results are illustrated in FIG. 4. In FIG. 4, the adsorbent (1) exhibited a selenious acid recovery percentage of 97% or greater in the strongly acidic to neutral pH region (pH 1 to 7).

Meanwhile, the adsorbent (1) exhibited a selenic acid recovery percentage of 0.3% or less in the entire pH region.

2. With respect to the adsorbent (2) obtained in Example 2, the effect of pH on the selenious acid recovery percentage was evaluated by the following methods.

That is, the procedure was performed in the same manner as in Example 1 except that the adsorbent (2) was used in place of the adsorbent (1), and a selenious acid solution (selenious acid concentration: 100 μmol/L) or a selenic acid solution (selenic acid concentration: 100 μmol/L) having a pH changed within a range of 1 to 11 was used.

The results are illustrated in FIG. 5. In FIG. 5, the adsorbent (2) had a selenious acid recovery percentage of 97% or greater and a selenic acid recovery percentage of 10% or less, at pH 1 to 8.

As described above, it is clear that the adsorbent of the present disclosure has the ability to selectively adsorb and recover selenious acid in a wide pH region.

Maximum Adsorption Capacity for Selenious Acid

With respect to the adsorbents (1) and (2) obtained in Examples, the maximum adsorption capacity for selenious acid was evaluated by the following methods.

Specifically, 10 mL of a selenious acid solution (100 to 2000 μmol/L) having a pH of 4 and 10 mg of the adsorbent were added to a 50-mL centrifugation tube, and the tube was agitated at 25°C and 200 rpm for 1 hour.

After the agitation, the content in the centrifuge tube was filtered through a membrane filter (nitrocellulose, pore size: 0.45 μm), and the concentration of selenious acid in the filtrate (Se: mol/L) was quantified by inductively coupled plasma (ICP) optical emission spectrometer (iCAP6300, manufactured by Thermo Fischer Scientific, Waltham, Massachusetts).

FIG. 6 shows an adsorption isotherm of selenious acid in the case of using the adsorbent (1). Further, FIG. 7 shows an adsorption isotherm of selenious acid in the case of using the adsorbent (2). From the Langmuir adsorption isotherm, the maximum adsorption capacity ($Q_{max}$) for selenious acid was calculated. As a result, the $Q_{max}$ when the adsorbent material (1) was used was 625 μmol/g, and the $Q_{max}$ when the adsorbent material (2) was used was 1330 μmol/g.

Influence of Coexisting Ions on Selenious Acid Adsorption

With respect to the adsorbents (1) and (2) obtained in Examples, the influence of coexisting ions on the selenious acid adsorption was evaluated by the following methods.

Specifically, 10 mL of a test solution selected from the following solutions 1 to 5 and 0.01 g of the adsorbent were added to a 50-mL centrifugation tube, and the tube was agitated at 25°C and 200 rpm for 1 hour.

After the agitation, the content in the centrifuge tube was filtered through a membrane filter (nitrocellulose, pore size: 0.45 μm), and the concentration of selenium in the filtrate (Se: mol/L) was quantified by inductively coupled plasma (ICP) optical emission spectrometer (iCAP6300, manufactured by Thermo Fischer Scientific, Waltham, Massachusetts). Then, the selenious acid recovery percentage was calculated in the same manner as in Effect of pH on Recovery Percentage.

Test Solution

1. A solution containing 100 μmol/L of selenious acid and having a pH of 4
2. A solution containing 100 μmol/L of selenious acid and 1 mol/L of NaCl and having a pH of 4
3. A solution containing 100 μmol/L of selenious acid and 1 mol/L of $Na_2HPO_4$ and having a pH of 4
4. A solution containing 100 μmol/L of selenious acid and 1 mol/L of $(NH_4)_2SO_4$ and having a pH of 4
5. A solution containing 100 μmol/L of selenious acid and 3 mol/L of $(NH_4)_2SO_4$ and having a pH of 4

The results in the case of using the adsorbent (1) are indicated in FIG. 8. In addition, the results in the case of using the adsorbent (2) are indicated in FIG. 9. FIGS. 8 and 9 indicate that the adsorbent of the present disclosure can recover selenious acid (Se (IV)) in a solution containing 1 mol/L of $Cl^-$, $H_2PO_4^-$, and $SO_4^{2-}$together with selenious acid, at a recovery percentage of 98% or greater. Further, 99% of selenious acid (Se (IV)) could be recovered even in the presence of sulfate ions at a high concentration (3 mol/L).

From the above results, it can be seen that since the adsorbent of the present disclosure has the group represented by Formula (a-1) or the group represented by Formula (a-2), it has high selectivity for selenious acid (Se (IV)), and can selectively recover selenious acid (Se (IV)) without being affected by the coexistence of a high concentration of anions.

As a summary of the above, configurations and variations of the present disclosure are described below.

(1) Use of a cellulose derivative (I) having a repeating unit represented by Formula (I) as a selenious acid adsorbent.
(2) The selenious acid adsorbent according to (1), in which a total degree of substitution of the group represented by Formula (a-1) and the group represented by Formula (a-2) is from 0.1 to 3.0.
(3) A selenious acid adsorbent including a cellulose derivative (I) having a repeating unit represented by Formula (I).
(4) The selenious acid adsorbent according to (3), in which a total degree of substitution of the group represented by Formula (a-1) and the group represented by Formula (a-2) is from 0.1 to 3.0.
(5) A wastewater treatment apparatus including the selenious acid adsorbent described in (3) or (4).
(6) The wastewater treatment apparatus according to (5), in which the wastewater treatment apparatus has a function of bringing wastewater containing selenious acid into contact with the included selenious acid adsorbent, causing the selenious acid to be adsorbed onto the selenious acid adsorbent, and removing the selenious acid from the wastewater.
(7) A wastewater treatment method including: bringing wastewater containing selenious acid into contact with the selenious acid adsorbent described in (3) or (4), causing the selenious acid to be adsorbed onto the selenious acid adsorbent, and removing the selenious acid from the wastewater.
(8) A method for producing a selenious acid adsorbent,
the method including: preparing a cellulose derivative (I) having a repeating unit represented by Formula (I) through the following steps [1] to [3]; and producing the selenious acid adsorbent described in (3) or (4) using the prepared cellulose derivative (I):

[1] reacting cellulose with a compound represented by Formula (2-1) or (2-2) to produce a cellulose derivative (II) having a repeating unit represented by Formula (II);
[2] deprotecting an imino group or an amino group of the cellulose derivative (II) to produce a cellulose derivative (III) having a repeating unit represented by Formula (III); and
[3] reacting the cellulose derivative (III), in the presence of a sulfur compound, with a quaternary ammonium compound represented by Formula (3) to produce the cellulose derivative (I) having the repeating unit represented by Formula (I):

$$N^+(R^2)_4X^- \quad (3)$$

where each $R^2$ represents an alkyl group having from 1 to 10 carbons, $X^-$represents a counter anion, and four $R^2$ may be identical or different.

(9) A wastewater treatment agent including a cellulose derivative (I) having a repeating unit represented by Formula (I).
(10) Use of a cellulose derivative (I) having a repeating unit represented by Formula (I) as a wastewater treatment agent.
(11) A selenium-containing water treatment agent including a cellulose derivative (I) having a repeating unit represented by Formula (I).
(12) Use of a cellulose derivative (I) having a repeating unit represented by Formula (I) as a selenium-containing water treatment agent.
(13) A method for recovering selenious acid including causing the selenious acid to be adsorbed onto a cellulose

derivative (I) having a repeating unit represented by Formula (I), and recovering the selenious acid.

Industrial Applicability

According to the selenious acid adsorbent of the present disclosure, it is possible to selectively adsorb and recover selenious acid from a medium in which selenious acid coexists with anions such as a halogen ion, a sulfite ion, a sulfate ion, and a phosphate ion, such as desulfurizer wastewater from a coal-fired power plant.

## Claims

1. A selenious acid adsorbent comprising a cellulose derivative (I) having a repeating unit represented by Formula (I):

[Chem. 1]

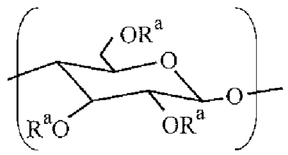

(I)

where each $R^a$ is identical or different and represents a hydrogen atom, a group represented by Formula (a-1), or a group represented by Formula (a-2), and at least one of all the $R^a$s included in the cellulose derivative is a group represented by Formula (a-1) or a group represented by Formula (a-2):

[Chem. 2]

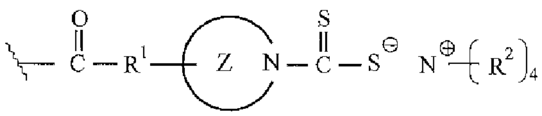

(a-1)

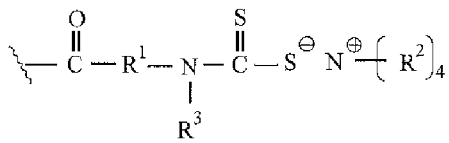

(a-2)

where ring Z represents a heterocycle containing a nitrogen atom as a heteroatom, $R^1$ represents a single bond or an alkylene group having from 1 to 10 carbons, $R^2$ represents an alkyl group having from 1 to 10 carbons, and four $R^2$s are identical or different, and $R^3$ represents a hydrogen atom or an alkyl group having from 1 to 10 carbons.

2. The selenious acid adsorbent according to claim 1, wherein a total degree of substitution of the group represented by Formula (a-1) and the group represented by Formula (a-2) is from 0.1 to 3.0.

3. A wastewater treatment apparatus comprising the selenious acid adsorbent described in claim 1 or 2.

4. The wastewater treatment apparatus according to claim 3, wherein the wastewater treatment apparatus has a function of bringing wastewater containing selenious acid into contact with the included selenious acid adsorbent, causing the selenious acid to be adsorbed onto the selenious acid adsorbent, and removing the selenious acid from the wastewater.

5. A wastewater treatment method comprising bringing wastewater containing selenious acid into contact with the selenious acid adsorbent described in claim 1 or 2, causing the selenious acid to be adsorbed onto the selenious acid adsorbent, and removing the selenious acid from the wastewater.

**6.** A method for producing a selenious acid adsorbent, the method comprising:
preparing a cellulose derivative (I) having a repeating unit represented by Formula (I) through the following steps [1] to [3]; and producing the selenious acid adsorbent described in claim 1 or 2 using the prepared cellulose derivative (I):

[1] reacting cellulose with a compound represented by Formula (2-1) or (2-2) to produce a cellulose derivative (II) having a repeating unit represented by Formula (II):

[Chem. 3]

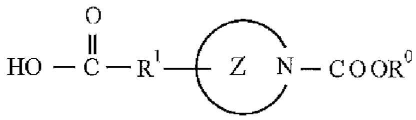

(2-1)

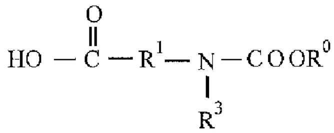

(2-2)

where ring Z represents a heterocycle containing a nitrogen atom as a heteroatom, $R^1$ represents a single bond or an alkylene group having from 1 to 10 carbons, and $R^3$ represents a hydrogen atom or an alkyl group having from 1 to 10 carbons, and $R^0$ represents a monovalent hydrocarbon group or a monovalent heterocyclic group; and

[Chem. 4]

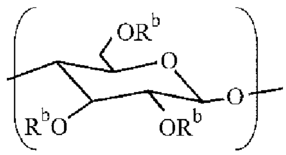

(II)

where each $R^b$ is identical or different and represents a hydrogen atom or a group represented by Formula (b-1) or a group represented by Formula (b-2):

[Chem. 5]

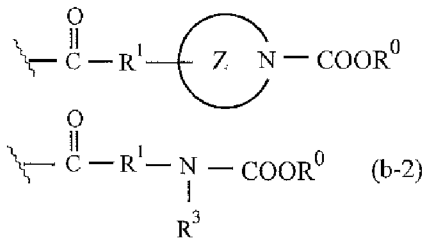

(b-1)

(b-2)

where ring Z, $R^1$, $R^3$, and $R^0$ are the same as described above, and at least one of all the $R^b$s included in the cellulose derivative is the group represented by Formula (b-1) or the group represented by Formula (b-2);

[2] deprotecting an imino group or an amino group of the cellulose derivative (II) to produce a cellulose derivative (III) having a repeating unit represented by Formula (III):

[Chem. 6]

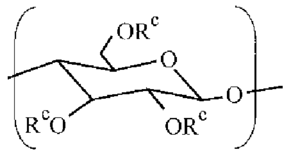

(III)

where each $R^c$ is identical or different and represents a hydrogen atom or a group represented by Formula (c-1) or a group represented by Formula (c-2):

[Chem. 7]

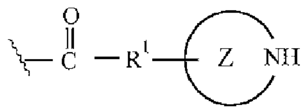

(c-1)

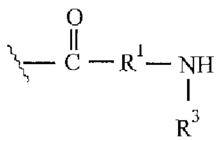

(c-2)

where ring Z, $R^1$, and $R^3$ are the same as described above, and at least one of all the $R^c$s included in the cellulose derivative is the group represented by Formula (c-1) or the group represented by Formula (c-2), and the group represented by Formula (c-1) or Formula (c-2) may form a salt; and

[3] reacting the cellulose derivative (III), in the presence of a sulfur compound, with a quaternary ammonium compound represented by Formula (3) to produce the cellulose derivative (I) having the repeating unit represented by Formula (I):

$N^+(R^2)_4X^-$ (3)

where each $R^2$ represents an alkyl group having from 1 to 10 carbons, $X^-$ represents a counter anion, and four $R^2$s may be identical or different; and

[Chem. 8]

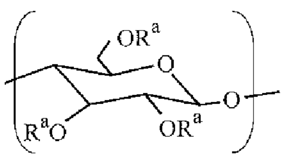

(I)

where each $R^a$ is identical or different and represents a hydrogen atom or a group represented by Formula (a-1) or a group represented by Formula (a-2):

[Chem. 9]

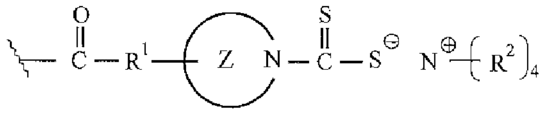

(a-1)

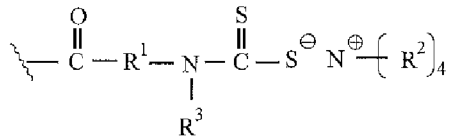

(a-2)

where ring Z, $R^1$, $R^2$, $R^3$ are the same as described above, and at least one of all the $R^a$s included in the cellulose derivative is the group represented by Formula (a-1) or the group represented by Formula (a-2).

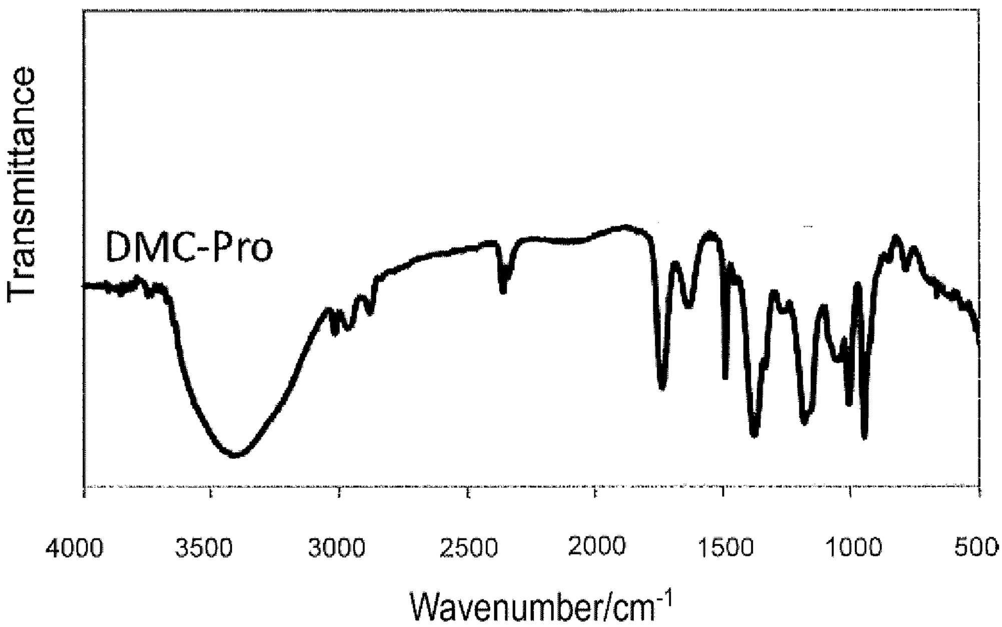
Transmittance
DMC-Pro
4000
3500
3000
2500
2000
1500
1000
500
Wavenumber/cm-1

FIG. 1

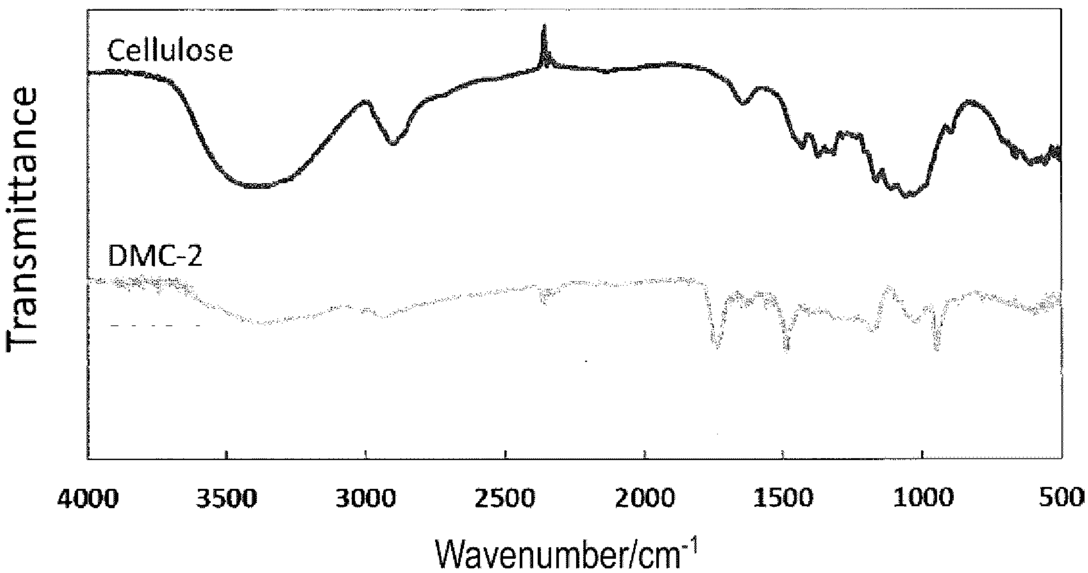
Cellulose
DMC-2
Transmittance
4000
3500
3000
2500
2000
1500
1000
500
Wavenumber/cm-1

FIG. 2

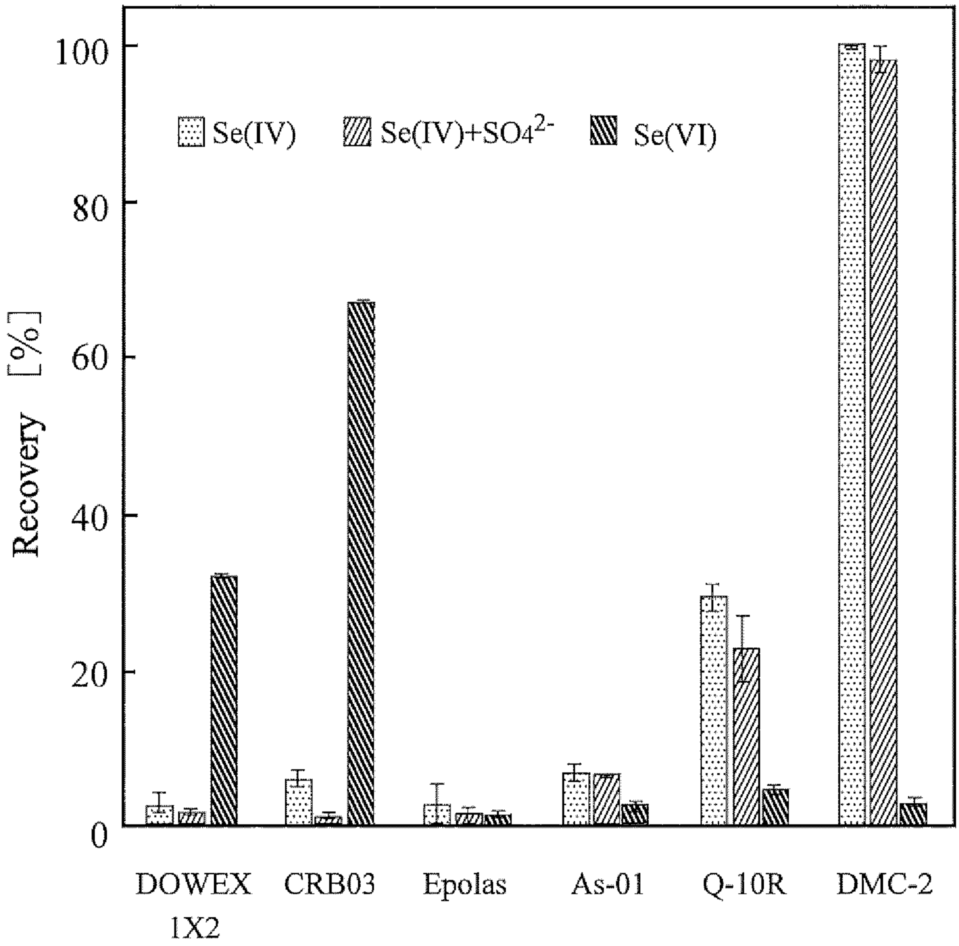
100
80
60
40
20
0
Recovery [%]
Se(IV)
Se(IV)+SO4^2-
Se(VI)
DOWEX 1X2
CRB03
Epolas
As-01
Q-10R
DMC-2

FIG. 3

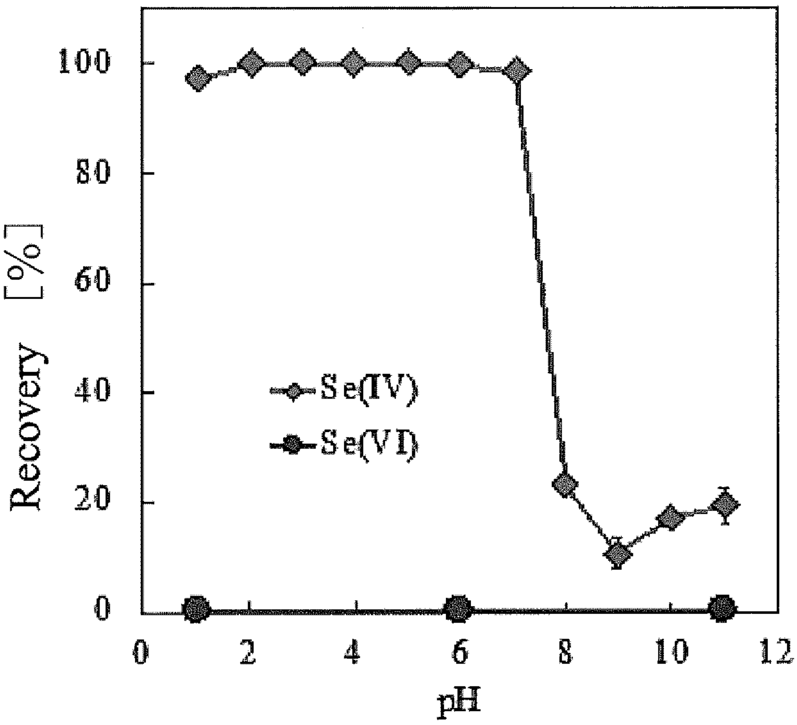


FIG. 4

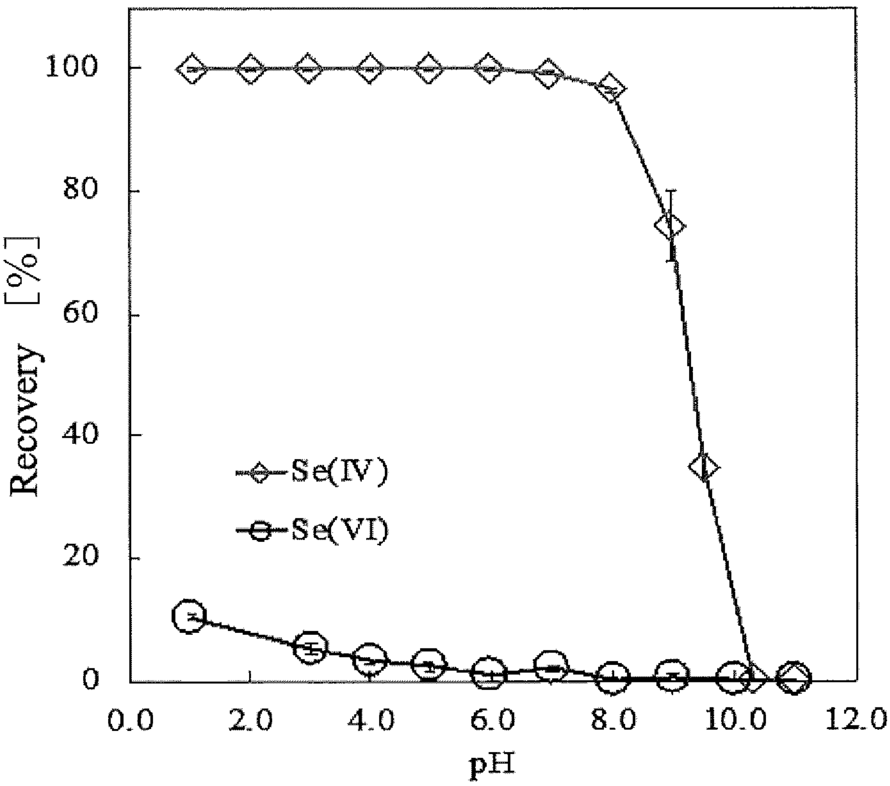


FIG. 5

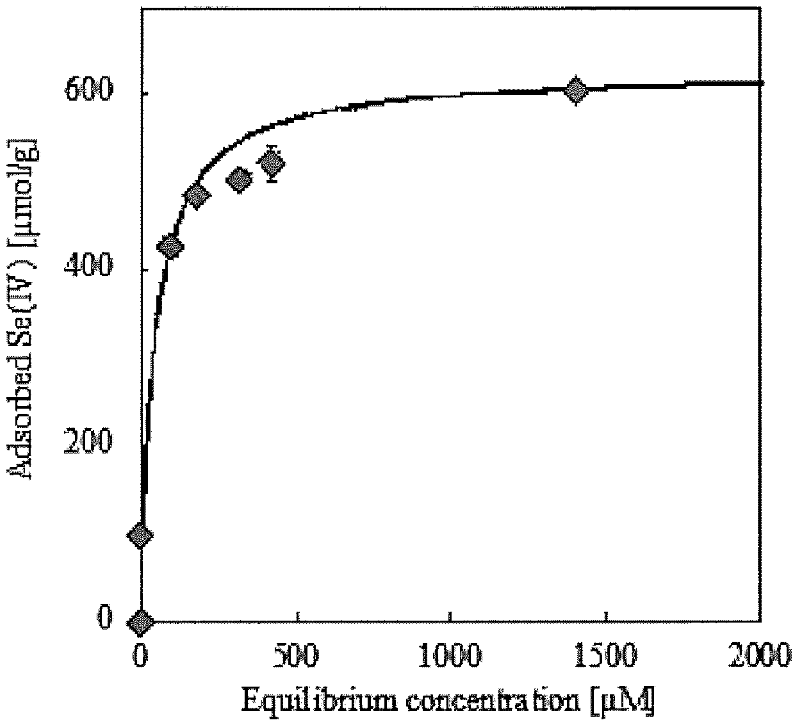
Adsorbed Se(IV) [µmol/g]
600
400
200
0
0
500
1000
1500
2000
Equilibrium concentration [µM]

FIG. 6

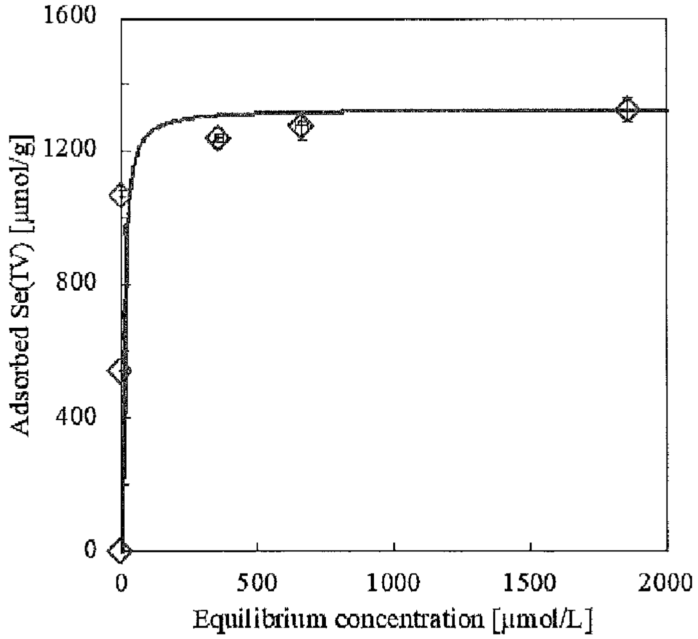
1600
1200
800
400
0
Adsorbed Se(IV) [μmol/g]
0
500
1000
1500
2000
Equilibrium concentration [μmol/L]

FIG. 7

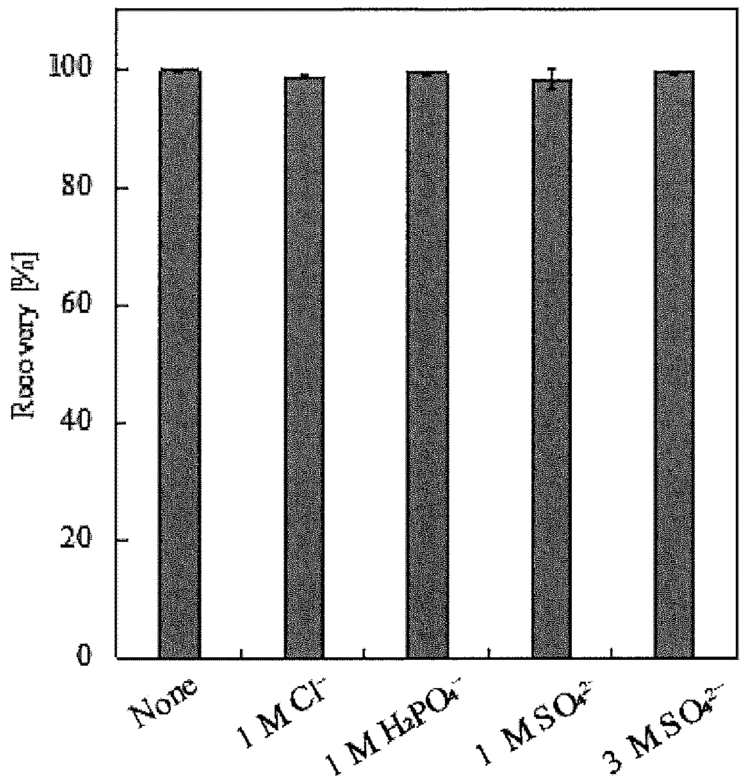


FIG. 8

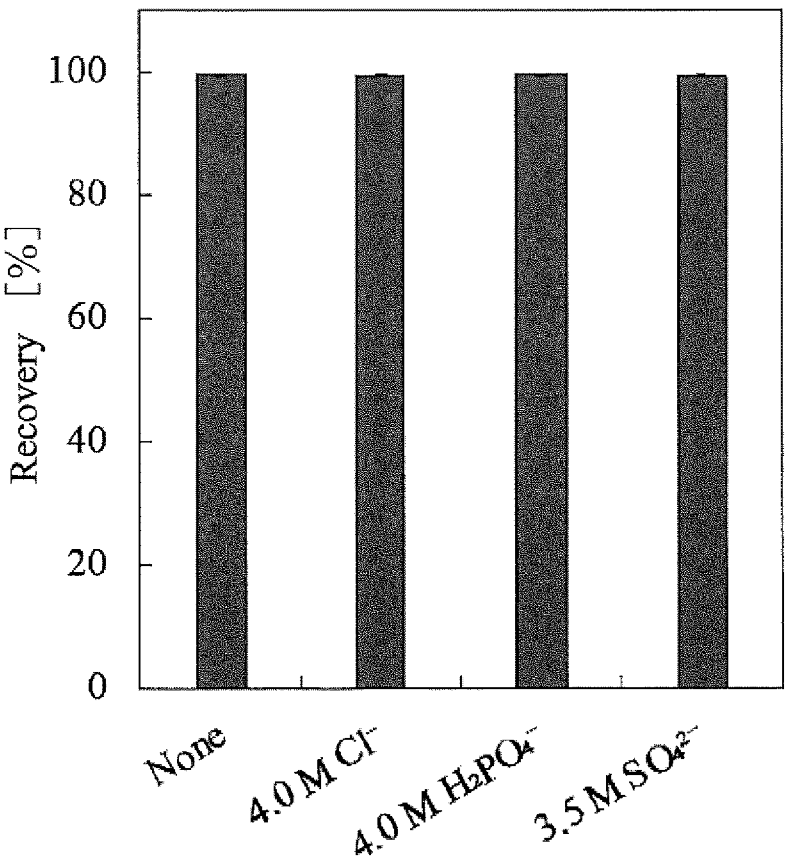


FIG. 9

## INTERNATIONAL SEARCH REPORT

International application No.
PCT/JP2020/030577

A. CLASSIFICATION OF SUBJECT MATTER
Int. Cl. C02F1/28(2006.01)i, B01J20/26(2006.01)i, B01J20/30(2006.01)i
FI: C02F1/28 A, B01J20/26 C, B01J20/30

According to International Patent Classification (IPC) or to both national classification and IPC

B. FIELDS SEARCHED

Minimum documentation searched (classification system followed by classification symbols)
Int. Cl. C02F1/28, 42, 58-64, B01J20/00-34, 39/00-49/90, C08B3/14, B01D53/34-96

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
|---|---|---|
| Y | JP 2018-83882 A (DAICEL CORP.) 31 May 2018, paragraphs [0005]-[0079] | 1-6 |
| Y | JP 2017-140593 A (CHUBU KIRESUTO KK) 17 August 2017, claims 1-2, paragraphs [0016], [0046] | 1-6 |
| Y | JP 2000-262804 A (DIRECTOR GENERAL, AGENCY OF INDUSTRIAL SCIENCE AND TECHNOLOGY) 26 September 2000, paragraphs [0010], [0011] | 1-6 |
| Y | JP 2015-506274 A (NALCO CO.) 02 March 2015, paragraphs [0018], [0024] | 1-6 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04.09.2020 | 15.09.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/030577

| Patent Documents referred to in the Report | Publication Date | Patent Family | Publication Date |
|---|---|---|---|
| JP 2018-83882 A | 31.05.2018 | (Family: none) | |
| JP 2017-140593 A | 17.08.2017 | (Family: none) | |
| JP 2000-262804 A | 26.09.2000 | JP 3060013 B1 | |
| JP 2015-506274 A | 02.03.2015 | US 2012/0177554 A1<br>paragraphs [0020], [0026]<br>WO 2013/119544 A1<br>EP 3272409 A1<br>CN 104053489 A<br>CA 2795692 A1<br>KR 10-2017-0137220 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10249392 A
- JP 2015506274 A